(19) **Europäisches Patentamt**

**European Patent Office**

**Office européen des brevets**

(11) **EP 1 494 307 B1**

(12) **EUROPEAN PATENT SPECIFICATION**

(45) Date of publication and mention
of the grant of the patent:
**16.08.2006 Bulletin 2006/33**

(51) Int Cl.:
*H01M 8/10* (2006.01)     *C08J 5/22* (2006.01)
*B01D 71/28* (2006.01)

(21) Application number: **03425429.2**

(22) Date of filing: **30.06.2003**

(54) **Polyelectrolyte membrane, method for its production and fuel cell using said polyelectrolyte membrane**

Polyelektrolytmembran, Verfahren zur Produktion und Brennstoffzelle enthaltend diese Polyelektrolytmembran

Membrane polyélectrolyte, procédé de production et pile à combustible contenant cette membrane polyélectrolyte

(84) Designated Contracting States:
**DE FR GB IT**

(43) Date of publication of application:
**05.01.2005 Bulletin 2005/01**

(73) Proprietor: **STMicroelectronics S.r.l.**
**20041 Agrate Brianza (Milano) (IT)**

(72) Inventors:
• **Napolitano, Teresa**
  **80030 Cimitile (Napoli) (IT)**
• **Coffa, Salvatore**
  **95030 Tremestieri Etneo (Catania) (IT)**
• **Mensitieri, Giuseppe**
  **80132 Napoli (IT)**
• **Borriello, Anna**
  **80055 Portici (Napoli) (IT)**
• **Nicolais, Luigi**
  **80056 Ercolano (Napoli) (IT)**

(74) Representative: **Zambardino, Umberto**
  **Botti & Ferrari S.r.l.**
  **Via Locatelli, 5**
  **20124 Milano (IT)**

(56) References cited:
  **EP-A- 1 179 550**

• **C. MANFREDI, M.A. DEL NOBILE, G. MENSITIERI, G. GUERRA, M. RAP: J. POLYM. SCI. POLYM. PHYS. ED., vol. 35, 1997, pages 133-140, XP001172887**
• **PATENT ABSTRACTS OF JAPAN vol. 018, no. 097 (C-1167), 17 February 1994 (1994-02-17) & JP 05 295161 A (IDEMITSU KOSAN CO LTD), 9 November 1993 (1993-11-09) -& DATABASE WPI Section Ch, Week 199349 Derwent Publications Ltd., London, GB; Class A13, AN 1993-392799 XP002261898 & JP 05 295161 A (IDEMITSU KOSAN CO LTD), 9 November 1993 (1993-11-09)**

**Description**

Field of Application

In its general aspect, the present invention relates to a polyelectrolyte membrane for electrochemical applications, in particular for fuel cells.

In particular, the present invention relates to a polyelectrolyte membrane for the above applications, which can be produced by forming the polyelectrolyte into a film.

Furthermore, the present invention relates to a method for producing the above polyelectrolyte membrane as well as to a fuel cell using said polyelectrolyte membrane.

Prior Art

In recent years, attention has been paid to new-energy techniques in view of environmental problems. A noticeable one of the new-energy techniques is a fuel cell. The fuel cell converts a chemical energy to an electric energy by electrochemically reacting hydrogen with oxygen, and exhibits a high-energy efficiency. Conventional fuel cells have been classified into phosphoric acid-type fuel cells, molten carbonate-type fuel cells, solid oxide-type fuel cells, solid polymer type fuel cells, etc., according to kinds of electrolytes used. As hydrogen sources for the fuel cells, there have been used methanol, natural gases and the like which are converted or reformed into hydrogen in the fuel cells. Among these fuel cells, the solid polymer-type fuel cells using a polyelectrolyte membrane (high-polymer ion-exchange membrane) as an electrolyte thereof, have a simple structure and are easy in maintenance, and are therefore expected to be applied especially in the automotive field.

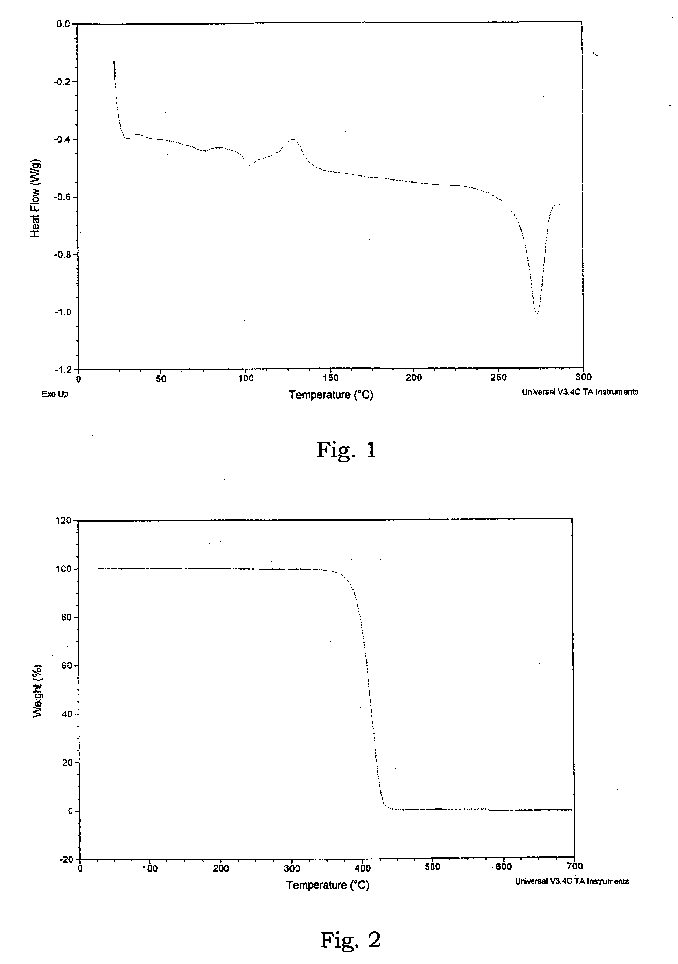

The main function of the membrane in the fuel cell is to transport protons from the anode, where the protons are formed by decomposition of hydrogen gas, to the cathode where the protons react with oxygen gas and electrons to form water (see figure 1).

Furthermore, the membrane should provide a gas barrier and physically separate the electrodes. In order to fulfil these functions, the membrane should be prepared from a polymer having excellent mechanical, thermal, hydrolytic, oxidative and reductive stability. These high demands require the use of very stable polymers, which normally limits the materials choice.

At present, NAPHION®-type membranes available from DuPont, or the like are the most known materials on the market.

NAPHION®-type membrane contain perfluorinated resins having a perfluoroalkyl side chain and a perfluoro alkyl ether side chain with a sulfonic acid group at its end. Although, such membranes meet many of the requirements described above, they still show some shortcomings. These shortcomings include mainly a high cost of the materials forming the membranes. In addition, the membranes show an unacceptable methanol cross-over and water transport rates and have completely inadequate properties above 100°C, an important emerging condition for which membranes will be used.

A recent development in the field of proton-conductive polymer membrane is represented by the sulfonation of atactic and syndiotactic polystyrene. Carretta et al. [*J. Membr. Sci.,* 166, pp. 189-197, (2000)] have partially sulfonated commercially non cross-linked atactic polystyrene to various extents, obtaining a homogeneous distribution of the sulfonic acid groups in the polymer. Since the resulting materials are not cross-linked, high quality membranes were easily obtained by evaporation casting from appropriate solvents. The level of sulfonation was carefully adjusted so as to maximize the proton conductivity, while preventing the membrane from becoming soluble in water. Membranes cast from these materials were investigated in relation to proton conductivity and methanol permeability in the temperature range from 20°C to 60°C. It was found that both these properties increase as the polymer is increasingly sulfonated, with abrupt jumps occurring at a concentration of sulfonic acid groups of about 15mol%. The most extensively sulfonated membrane exhibited conductivity equal to that of Nafion. They have measured for a degree of sulfonation of 20% a conductivity of $5 \cdot 10^{-2} \Omega^{-1} \mathrm{cm}^{-1}$, very close to that one of the Nafion®.

EP 1179550 discloses the preparation of a polyelectrolyte membrane for fuel cells in which the polyelectrolyte comprises at least a styrenic polymer having a syndiotactic configuration (s-PS) as essential component. The s-PS may or may not contain ion exchange groups therein. Accordingly, the polyelectrolyte is classified into two types, i.e., (1) those polyelectrolytes comprising an ion-exchange group-containing thermoplastic resin other than SPS, an ion-exchange group-free s-PS and, if required, the other ion-exchange group-free thermoplastic resin; and (2) those polyelectrolytes comprising a thermoplastic resin containing at least an ion-exchange group-containing s-PS and, if required, an ion-exchange group-free thermoplastic resin. As the thermoplastic resins other than s-PS used in the polyelectrolytes (1) and (2), there may be used any suitable thermoplastic resins without particular limitations. The weight-average molecular weight of the styrenic polymers is preferably 10,000 or higher, more preferably 50,000 or higher. Of these styrenic polymers, especially preferred is syndiotactic polystyrene.

The ion exchange groups introduced into SPS or the thermoplastic resins other than SPS may be either cation exchange groups or anion exchange groups. The method of introducing the ion exchange groups into SPS or the thermoplastic resins other than SPS is not particularly restricted, and any known suitable methods may be used therefore. For example, the ion exchange groups may be introduced into SPS by heating the polymer in concentrated sulfuric acid, or by reacting the polymer with chlorosulfonic acid. After introducing the ion exchange groups, the polyelectrolyte membrane is produced by forming the above polyelectrolyte into a film. For example, the polyelectrolyte membrane is preferably produced by a solution-casting method in which the polyelectrolyte kept in a solution state is cast over a substrate to form a film, or by a melt-press or melt-extrusion method in which the molten polyelectrolyte is press-molded or extrusion-molded into a film.

However, the process for obtaining the above polyelectrolyte membrane is quite complicated and requires several working steps due to the fact that it is necessary to perform several washing steps and filtration for removing the residual sulfonating reagent used for the sulfonation of the polymer. This results in a considerable waste of time and in a higher production costs.

Therefore, there is a need to provide a polyelectrolyte membrane for electrochemical applications, in particular for small fuel cells, having good electric conductivity properties and which can be produced at lower costs and with a reduction of working steps.

Summary of the Invention

The technical problem underlying the present invention is that of providing a polyelectrolyte membrane for electrochemical applications, in particular for small fuel cells, which satisfies the above need.

Such a technical problem is solved according to independent claim 1.

In the present invention, the term "clathrate form" relates to the trapping of compounds into cavities, preferably regularly spaced nanocavities, present in the crystalline phase of styrenic polymers or copolymers, so forming so-called inclusion compounds therein. Generally, such compounds are molecules of solvents used for the preparation of styrenic polymers or copolymers as it will be better explained hereinafter.

Preferably, the styrenic polymers or copolymers used in the present invention have a substantially syndiotactic configuration, are obtained in a nanoporous crystalline form and by polymerization of styrene with olefins having the formula $CH_2=CH-R$ in which R is an alkyl-aryl group or a substituted aryl group having from 6 to 20 carbon atoms or with other monomer compounds having unsaturated ethylene groups.

Representative and non-limiting examples of said styrenic polymers or copolymers are poly(p-methylstyrene), poly(m-methylstyrene), poly(p-chlorostyrene), poly(m-chlorostyrene), poly(chloromethylstyrene), poly(bromostyrene), poly(fluorostyrene), etc.

The most preferred styrenic polymers used in the present invention is syndiotactic polystyrene in its clathrate form.

Preferably, the polyelectrolyte membrane according to the invention is produced by forming into a film the syndiotactic styrenic polymer or co-copolymer obtained in its clathrate form and having and ion-exchange groups.

The average molecular weight of the syndiotactic styrenic polymer or co-copolymer is not particularly restricted. In the case of syndiotactic polystyrene it is preferably higher than 10,000 and more preferably comprised between 100,000 and 1,500,000.

In the present invention, the ion exchange groups introduced into the syndiotactic styrenic polymer or co-copolymer may be either cation exchange groups or anion exchange groups. Examples of the ion exchange groups include sulfonic group, carboxyl group, phosphoric group, quaternary ammonium salt group, primary, secondary or tertiary amine group, or the like. Of these ion exchange groups, the sulfonic group is particularly preferred.

The inventors have prepared polyelectrolyte membranes from several syndiotactic styrenic polymers and co-polymers in their clathrate forms, in particular from syndiotactic polystyrene in its clathrate form, and have found after extensive studies that said membranes exhibit good electric conductivity properties which render them suitable for electrochemical applications in particular for the production of fuel cells.

Syndiotactic polystyrene (s-PS) is a rigid semicrystalline material with a glass transition temperature close to 80-90°C and a high melting temperature close to 270°C and, unlike the corresponding isotactic polymer, it crystallizes rapidly upon cooling from the melt. Several structural studies have shown a very complex polymorphic behaviour for this polymer. See for instance Y. Chatani, Y. Fujii, Y. Shimane, T. Ijitsu, Polymer Preprint, Jpn (Eng. Ed.) 37, E428 (1988); A. Immirzi, F. de Candia, P. Ianneli, V. Vittoria, A. Zambelli, Makromol. Chem. Rapid Commun. 9, 761, (1988); V. Vittoria, F. de Candia, P. Ianneli, P.A. Immirzi, Makromol. Chem.Rapid Commun. 9, 765, (1988); G. Guerra, V. M. Vitagliano, P. Corradini, E. Albizzati, Ital. Pat. 19588, (Feb. 1989) (Himont, Inc.); V. Vittoria, R. Russo, F. de Candia, J. Macromol. Sci. Phys. B28, 419 (1989); G. Guerra, V. M. Vitagliano, C. De Rosa, V. Petraccone, P. Corradini, Macromolecules 23, 1539 (1990); G. Guerra, C. De Rosa, V. M. Vitagliano, V. Petraccone, P. Corradini, J. Polym. Sci. Polym. Phys. Ed. 29, 265 (1990); G. Guerra, C. De Rosa, V. M. Vitagliano, V. Petraccone, P. Corradini, F. E. Karasz, Polymer Commun. 32, 30 (1991); C. De Rosa, G. Guerra, V. Petraccone, P. Corradini, Polym. J. 23, 1435 (1991); M. Rapacciuolo, C. De Rosa, G. Guerra, G. Mensitieri, A. Apicella, M. A. Del Nobile, J. Mat. Sci. Lett. 10, 1084 (1991); C. De Rosa, M. Rapacciuolo, G. Guerra, V. Petraccone, P. Corradini, Polymer 33, 1423 (1992); Y. Chatani Y. Shimane, Y. Inoue, T. Inagaki, T. Ishioka, T. Ijitsu, t. Yukinari, Polymer 33, 488 (1992); O. Greis, Yxu, T. Asano, J. Petermann, Polymer 30, 590 (1989); G. Conti, E. Santoro, L. Resconi, G. Zerbi, Mikrochim. Acta 1, 297 (1988); R. A. Niquist, Appl. Spectrosc. 43, 440 (1989); N. M. Reynolds, J. D. Savage, S. L. Hsu, Macromolecules 22, 2867 (1989); M. Kobayashi, T. Nakaoki, N. Ishihara, Macromolecules 23, 78 (1990); G. Guerra, P. Musto, F. E. Karasz, W. J. MacKnight, Makromol. Chem.. 191, 2111 (1990); V. Vittoria, Polymer Commun. 31, 263, (1990); A. R. Filho, V. Vittoria, Makromol. Chem. Rapid Commun. 11, 199 (1990); N. M. Reynolds, S. L. Hsu, Macromolecules 23, 3463 (1990); N. M. Reynolds, H. D. Stidham, S. L. Hsu, Macromolecules 24, 3662 (1991); A. Grassi, P. Longo, G. Guerra, Makromol. Chem. Rapid Commun. 10, 687 (1989); M. A. Gomez, A. E. Tonelli, Macromolecules 23, 3385 (1990); ibidem 24, 3533 (1991); Chatani Y. et al., Polymer, 34, 1620-1624 (1993); Chatani Y., Shimane Y., Ijitsu T., Yukinari T., Polymer, 34, 1625-1629 (1993); De Rosa C., Macromolecules, 29, 8460-8465 (1996); De Rosa C., Guerra G., Petraccone V., Pirozzi B.; Macromolecules, 30, 4147-4152 (1997).

Different polymorphic forms of s-PS are characterized by widely different conformation. In fact, two crystalline forms include chains with a trans-planar conformation while two crystalline forms include chains with sequences of dihedral angles corresponding to a s(2/1)2 helical symmetry. Different modes of packing in different unit cells exist for the trans-planar chains of s-PS in the so called $\alpha$ and $\beta$ forms, for which hexagonal and orthorhombic unit cells have been described, respectively. Instead the chains with s(2/1)2 symmetry are present in the two crystalline forms named $\gamma$ and $\delta$. In particular, the term "$\delta$-form" has been used to indicate different clathrate structures, which include molecules of solvent.

As a result of extensive studies, the inventors have found that by introducing ion exchange groups into a formed film of syndiotactic polystyrene in its clathrate form, a polyelectrolite membrane is obtained which shows a good electric conductivity as well as a low-water permeability and a long-term stability. Similar results have been also found for polyelectrolyte membranes obtained from syndiotactic styrenic polymers and co-copolymers in their clathrate forms other than syndiotactic polystyrene in its clathrate form.

The polyelectrolyte membrane according to the invention is therefore particularly suitable to be used for fuel cells and similar electrochemical applications.

Without being bound to any scientific theory, it is believed that the clathrate regions into the syndiotactic styrenic polymers and copolymers, in particular into the syndiotactic polystyrene are able to supply regular pathways into the crystalline regions for the introduction of the ion-exchange groups, in particular for the introduction of sulfonic groups by means of a sulfonating agent.

This induces the anchoring of regularly spaced ionic groups along the polymer backbones included in the crystalline domains, resulting advantageously in effective percolation pathways for ion transport through the membrane.

In addition, the preparation of the polyelectrolyte membrane according to the invention is more simple and requires less working steps due to the fact that the introduction of ion-exchange groups (for example by sulfonation) is carried out on a already formed film containing a syndiotactic styrenic polymer or co-polymer in its clathrate form. This is well explained hereinafter with reference to the preparation of the polyelecrolyte membrane according to the invention.

The present invention also relates to a method for producing a polyelectrolyte membrane comprising at least one syndiotactic styrenic polymer or co-polymer in its clathrate form and having ion-exchange groups.

According to an embodiment of the present invention, the method comprises the steps of:

- preparing a solution containing at least one syndiotactic styrenic polymer or co-polymer in a solvent suitable to form clathrates into said at least one syndiotactic styrenic polymer or co-polymer,

- treating said solution to form a film containing said at least one syndiotactic styrenic polymer or co-polymer in clathrate form,

- introducing ion-exchange groups into said film containing said at least one syndiotactic styrenic polymer or co-polymer in clathrate form, so obtaining said polyelectrolyte membrane.

Preferably, said at least one syndiotactic styrenic polymer or co-polymer is constituted by syndiotactic polystyrene.

Syndiotactic styrenic polymers or co-copolymers can be prepared (synthesized) directly into a solvent suitable to form clathrates into them or can be provided in other way. For example, the preparation of syndiotactic polystyrene can suitably be made according to conventional procedures. Examples of suitable procedures for the preparation of syndiotactic polystyrene in its $\alpha$, $\gamma$ or $\delta$ polymorphic forms are described in G. Guerra, V. M. Vitagliano, C. De Rosa, V. Petraccone, P. Corradini, Macromolecules 23, 1539 (1990); Y. Chatani Y. Shimane, Y. Inoue, T. Inagaki, T. Ishioka, T.

Ijitsu, t. Yukinari, Polymer 33, 488 (1992); Chatani Y. et al., Polymer, 34, 1620-1624 (1993); Chatani Y., Shimane Y., Ijitsu T., Yukinari T., Polymer, 34, 1625-1629 (1993); De Rosa C., Macromolecules, 29, 8460-8465 (1996); De Rosa C., Guerra G., Petraccone V., Pirozzi B.; Macromolecules, 30, 4147-4152 (1997).

An essential feature of the present invention is that the solvent be chosen among those able to form clathrate into the used syndiotactic styrenic polymer or copolymer such as syndiotactic polystyrene. Solvents suitable to this purpose are well-known in the art, see for instance A. Del Nobile, G. Mensitieri, M.T. Rapacciuolo, P. Corradini, G. Guerra, C. Manfredi, Manufactured articles of a new crystalline modification of syndiotactic polystyrene capable of forming clathrates with solvents and process for the same and Italian Patent IT 1271842; Manfredi C., Del Nobile M.A., Mensitieri G., Guerra G., Rapacciuolo M., J. Polym. Sci. Polym. Phys. Ed., 35, 133 (1997).

For example, suitable solvents to form clathrates in particular into syndiotactic polystyrene can be chosen from the group comprising halogenated compounds such as chloroform, methyl chloride, methylene chloride, carbon tetrachloride, dichloroethane, trichloroethylene, tetrachloroethylene, dibromoethane, methyl iodide, aromatic compounds such as benzene, *o*-dichlorobenzene, toluene, styrene, cyclic compounds such as cyclohexane, tetrahydrofurane and sulphur-containing compounds such as carbon sulfide. These solvents may be used alone or in the form of a mixture of any two or more thereof.

Preferably, the solvent is chosen from chloroform, methylene chloride, *o*-dichlorobenzene and toluene.

In the preparation of the solution, the syndiotactic styrenic polymer or co-polymer is heated into the desired solvent at a temperature suitable to dissolve it. The dissolving temperature depends upon the composition of the polymer and kind of solvent used. Generally, the dissolving temperature is comprised between -50°C and the boiling temperature of the solvent used.

The polyelectrolyte membrane of the present invention is produced by forming the syndiotactic styrenic polymer or co-polymer into a film while said polymer or co-polymer being in its clathrate form and then by introducing ion-exchange groups into said film.

The method of forming the film of syndiotactic styrenic polymer or copolymer in a clathrate form is not particularly restricted. A solution-casting method is preferably used in which the syndiotactic styrenic polymer or co-polymer kept in a solution state into a solvent suitable to form clathrate is cast over a substrate to form a film.

The substrate can be of any type e.g., a glass plate, a metal plate such as a stainless steel plate or a resin sheet such as Teflon sheet and polyimide sheet. It may have a smooth surface or irregularities on its surface. After casting over the substrate with the solution prepared by dissolving the syndiotactic styrenic polymer or co-polymer used in an adequate solvent, the solvent is removed from the resultant film.

In particular, during solvent evaporation, the solution densifies and the resulting polymer/ solvent mixture first forms a gel and then a solid film made of amorphous and crystalline regions. Inside the film the solvent is partly dissolved into the amorphous domains and partly hosted into regularly spaced nanocavities present in the crystalline phase, forming so-called inclusion compounds (clathrate regions).

The presence of clathrate regions is essential for the present invention, since they supply regular pathways into the crystalline regions for the introduction of the ion-exchange groups, in particular for the introduction of sulfonic groups by means of a sulfonating agent.

This induces the anchoring of regularly spaced ionic groups along the polymer backbones included in the crystalline domains, resulting advantageously in effective percolation pathways for ion transport through the membrane.

In particular, according to the invention, when sulfonic groups are introduced into the film of syndiotactic polystyrene in its clathrate form, effective percolation pathways for proton transport through the membrane can be obtained even if the degree of sulfonation is lower compared to other techniques.

This confers good electric conductivity properties to the polyelectrolyte membrane according to the invention.

In addition, it should be noted that the polyelectrolyte membrane according to the invention does not require the introduction into the polymer of a large amount of ionic groups, for example by sulfonation, in order to have the desired electric conductivity properties. In fact, as explained above, thanks to the presence of clathrate regions that supply regular pathways into the crystalline regions for the introduction of the ion-exchange groups, a lower amount of ionic-groups as compared to other techniques is generally enough to guarantee an acceptable electric conductivity to the final membrane.

This is particularly advantageous since if a reduced amount of ionic-groups are introduced into the polymer, the mechanical properties of the polyelectrolyte membrane are improved while at the same time, the regular disposition of ionic groups along the polymer backbones included in the crystalline domains allows to obtain good electric conductivity properties.

To give an example, when syndiotactic polystyrene in its clathrate form is sulfonated, the resulting polyelectrolyte membrane exhibits good electric conductivity using a theoretic degree of sulfonation ranging from about 20% to 40% by weight on the weight of syndiotactic polystyrene.

According to another embodiment of the present invention, the method for producing a polyelectrolyte membrane comprising at least one syndiotactic styrenic polymer or co-polymer in its clathrate form having ion-exchange groups comprises the steps of:

- providing a film of at least one syndiotactic styrenic polymer or copolymer,

- contacting said film of at least one syndiotactic styrenic polymer or copolymer with a solvent suitable to form clathrate into said at least one syndiotactic styrenic polymer or co-polymer for a time sufficient to form said clathrate, so obtaining a film in which said at least one syndiotactic styrenic polymer or co-polymer is in a clathrate form,

- introducing ion-exchange groups into said film of at least one syndiotactic styrenic polymer or co-polymer in its clathrate form, so obtaining said polyelectrolyte membrane.

Preferably, said at least one syndiotactic styrenic polymer or co-polymer is constituted by syndiotactic polystyrene preferably in a its $\alpha$, $\gamma$ or $\delta$ polymorphic form.

The film can be obtained in any way for example by a melt-press or melt-extrusion method in which the molten syndiotactic styrenic polymer or co-polymer is press-molded or extrusion-molded to obtain a film.

The film so obtained is then contacted with a solvent suitable to form clathrate into the syndiotactic styrenic polymer or co-polymer for example by soaking the film into said solvent for a time sufficient to form said clathrates.

In the method according to the invention, the introduction of ion-exchange groups into the syndiotactic styrenic polymer or co-polymer, in particular into the syndiotactic polystyrene can be performed by reacting the film of syndiotactic polystyrene in its clathrate form with any suitable agent able to incorporate the desired ion groups. For example, when sulfonic groups are to be introduced into syndiotactic polystyrene, the film of syndiotactic polystyrene in its clathrate form is preferably sulfonated in concentrated sulfuric acid or chlorosulfonic acid.

Preferably, for the introduction of ion-exchange groups is employed a solution of the appropriate agent in the same solvent used to form clathrate into the syndiotactic styrenic polymer or co-polymer.

It will be appreciated that since in the present invention, the sulfonation is performed on the film of syndiotactic styrenic polymer or co-polymer in its clathrate form rather than in a solution containing the polymer, as taught in EP 1179 550, the removal of residual sulfonating agent after sulfonation is more effective and simple. In particular, only few washings are generally necessary to remove residual sulfonating agent from the film containing syndiotactic styrenic polymer or co-polymer in its clathrate form. This advantageously results in a reduction of the working steps and of the manufacturing costs.

As mentioned above, the ion exchange groups introduced into the film may be either cation exchange groups or anion exchange groups. Examples of the ion exchange groups include sulfonic group, carboxyl group, phosphoric group, quaternary ammonium salt group, primary, secondary or tertiary amine group, or the like. Of these ion exchange groups, the sulfonic group is preferred.

The concentration of the syndiotactic polystyrene into the solution used in the solution-casting method is not particularly restricted, and is preferably in the range of 0.03 to 10% by weight, more preferably 0.1 to 5% by weight.

The treating temperature upon removal of the solvent varies depending upon kind of solvent used, etc., and is preferably in the range of -50 to 70°C. The removal of the solvent may be carried out under vacuum or by allowing the membrane to stand in a gas flow.

The polyelectrolyte membrane of the present invention preferably has an ion exchange capacity of 0.03 milli-equivalent/g or higher, more preferably 0.05 to 2.0 milli-equivalent/g, on the basis of weight of dried membrane.

The thickness of the polyelectrolyte membrane is not particularly restricted, and is preferably 0.1 to 1,000 micron, more preferably 1 to 200 micron. When the thickness of the polyelectrolyte membrane is below the lower value indicated above, the polyelectrolyte membrane tends to fail to show a practically usable strength. When the thickness of the polyelectrolyte membrane is more than the maximum value indicated above, the resistance of the polyelectrolyte membrane tends to become too large, resulting in deteriorated power generation performance of fuel cells obtained therefrom. The membrane thickness may be controlled by adjusting the concentration of the syndiotactic polystyrene into the solution or the thickness of the cast-coating film formed on the substrate in the case of the solution-casting method, and by adjusting the spacer thickness, the die gap, the taking-off speed, etc., in the case of the melt-press or melt-extrusion method.

The polyelectrolyte membrane according to the invention may be reinforced with a woven fabric, etc., if required.

The polyelecrolyte membrane according to the invention can be suitably used for many electrochemical applications, in particular for fuel cells and the like.

The fuel cell is a device for continuously generating an electric power or energy by continuously replenishing a fuel such as hydrogen and oxygen or air and simultaneously continuously discharging the reaction product composed mainly of water therefrom. As the hydrogen source, there may be used hydrogen itself as well as hydrogen derived from various hydrocarbon-based fuels such as natural gas, methane, alcohol and the like.

Also, the fuel cell generally comprises electrodes, electrolyte, fuel feed device, product discharge device, etc.

The electrodes contain electrode active materials.

The fuel cell of the present invention comprises the above polyelectrolyte membrane as an electrolyte. The polyelectrolyte membrane of the present invention can satisfy a good electric conductivity, a low water permeability and also it results in considerable advantages in terms of high power density. In addition, the use of polyelectrolyte membrane according to the invention allows to avoid the problems normally experienced in fuel cells using a liquid electrolyte such as PEMFC cells and alkaline fuel cells.

An application particularly interesting of the polyelectrolyte membrane according to the invention is in the large-scale production of small fuel cells to be used as power generators for portable power sources.

In the last few years, significant progress has been made in the development of portable electronic devices. Batteries, which have made advances in technologies, represent, at present, the only option possible for devices requiring electrical powers up to 100 W. However, the main limitations of batteries for applications such as cellular phones and laptop computers are the large weight and volume as well as the small energy density that limits the operation period before recharging. Replacement of batteries also has problems of recyclables, since the base materials cannot be easily re-used.

Such problem can be solved using a methanol or hydrogen fuel cell comprising a polyelectrolyte membrane according to the invention instead of the conventional batteries. As a matter of fact, a fuel cell according to the invention can provide an energy density 30 times higher than a conventional Ni/Cd battery. Furthermore, hydrogen rich fuels according to the invention have an electrochemical energy density two orders of magnitude higher than a battery on a weight basis.

The features and advantages of the polyelectrolyte membrane according to the present invention will become more evident from the following description, given by way of non-limiting examples with reference to the accompanying drawings.

Brief Description of the Drawings

In the drawings:

Figure 1 shows a Differential Scanning Calorimeter (DSC) scan of a unfunctionalized syndiotactic polystyrene membrane for comparison purpose,

Figure 2 shows a thermogravimetric curve of a unfunctionalized syndiotactic polystyrene membrane for comparison purpose,

Figure 3 shows a DSC scan of a melt-quenched sulfonated s-PS membrane according to the invention,

Figure 4 shows a thermogravimetric curve of a melt-quenched sulfonated s-PS membrane according to the invention,

Figure 5 shows an infrared spectra of a unfunctionalized s-PS membrane according to the invention, and

Figure 6 shows an infrared spectrum of a sulfonated s-PS membrane according to the invention.

**Examples 1 to 4**

Preparation of polyelectrolyte membranes containing syndiotactic polystyrene in its clathrate form.

Four samples (A to D) of syndiotactic polystyrene having the weight indicated in Table 1 were individually mixed with 20 ml of chloroform (99,9% HPLC grade, Aldrich Chemicals) and heated to about 100°C for 1.5 hours until the polymer was completely dissolved. In accordance with the solution-casting method, the solutions so obtained were individually cooled at room temperature and then poured into a Petri's dish until partially evaporation of the solvent. A film of s-PS having polymorphic clathrate form was thus obtained from each solution.

Each film was then sulfonated to introduce ionic groups into the s-PS having polymorphic clathrate form using chlorosulfonic acid. It was used a procedure modified from the method for the chlorosulfonation of styrene divinylbenzene co-polymers used by Rabia et al, React. Function. Polym. 28, 279 (1996).

In accordance with this procedure, each of the above-mentioned films produced by solution-casting method was soaked in 40 ml of an associated solution of chloroform and chlorosulfonic acid (99%, Aldrich Chemicals) at room temperature for 4 hours. The volume content of chlorosulfonic acid is indicated in Table 1 for each solution used. During the soaking time, each film underwent to sulfonation and the degree of sulfonation was controlled by the chlorosulfonic acid concentration according to conventional techniques.

Table 1

| Sample | s-PS (g) | Chlorosulfonic acid (ml) | Sulfonation (%) |
|--------|----------|--------------------------|-----------------|
| A | 0.5148 | 0.103 | 15.565 |
| B | 0.4904 | 0.15 | 23.796 |
| C | 0.4908 | 0.18 | 28.532 |
| D | 0.4867 | 0.2 | 31.969 |

The reaction mechanism for chlorosulfonic acid is described from the following equation:

$$2\ HOSO_2Cl \leftrightarrow H_2{}^+O\text{-}SO_2Cl + SO_3 + Cl^- \leftrightarrow {}^+SO_2Cl + HCl + HSO_{4-}$$

$$Ar + {}^+SO_2Cl + HSO_{4-} + HCl \rightarrow ArSO_2Cl + H_2SO_4 + HCl$$

$$\text{Overall reaction: } Ar + 2\ HOSO_2Cl \rightarrow ArSO_2Cl + H_2SO_4 + HCl$$

After the desired time reaction, each sulfonated membrane so obtained was washed with deionized water to facilitate the complete removal of residual sulfonating reagent from the functionalized s-PS film. The sulfonated membrane was then stirred in a 1 M NaOH (Sodium hydroxide 97% 20-40 Mesh bead, Aldrich Chemicals) solution at room temperature to hydrolyze the sulfonyl chloride to sulfonic group according to the following equation:

$$ArSO_2Cl + NaOH \rightarrow ArSO_3H + NaCl$$

Finally, each membrane was washed with water and dried in oven under vacuum, at 60°C for 1 hour.

Characterization methods and results

The membranes were characterized as to their thermal properties and behaviour of sulfonated syndiotactic polystyrene which were compared to corresponding thermal properties and behaviour of a unfunctionalized (i.e. without sulfonic groups) syndiotactic polystyrene membrane. For the sake of simplicity, only the results of the investigations on the membrane obtained from the sample C are shown. Similar results were obtained by the investigations on the membranes prepared from the sample A, B and D.

A TA Instrument 2910 Differential Scanning Calorimeter (DSC) equipped with a nitrogen purge was used to study the thermal properties of the syndiotactic polystyrene and sulfonated syndiotactic polystyrene. A TA Instrument 2950 Termogravimetric balance (TGA) equipped with a nitrogen purge was used to study the thermal behaviour of s-PS and sulfonated s-PS. Infrared spectra were obtained with a Nicolet Nexus FT-IR. Membranes were characterized by FT-IR spectroscopy to ascertain the presence of sulfonated groups attached to the phenyl rings.

In figure 1 is shown the DSC scan for unfunctionalized syndiotactic polystyrene membrane. For thermal scan the heating rate is 10°C/min. The glass transition temperature ($T_g$) of s-PS is about 100°C, the crystallization temperature ($T_c$) is about 130°C and the melting temperature ($T_m$) is about 270°C.

In figure 2 is shown the TG curve for unfunctionalized syndiotactic polystyrene membrane. For thermal scan the heating rate is 10°C/min. Until 370°C, s-PS membrane is stable but near 400°C begins its degradation.

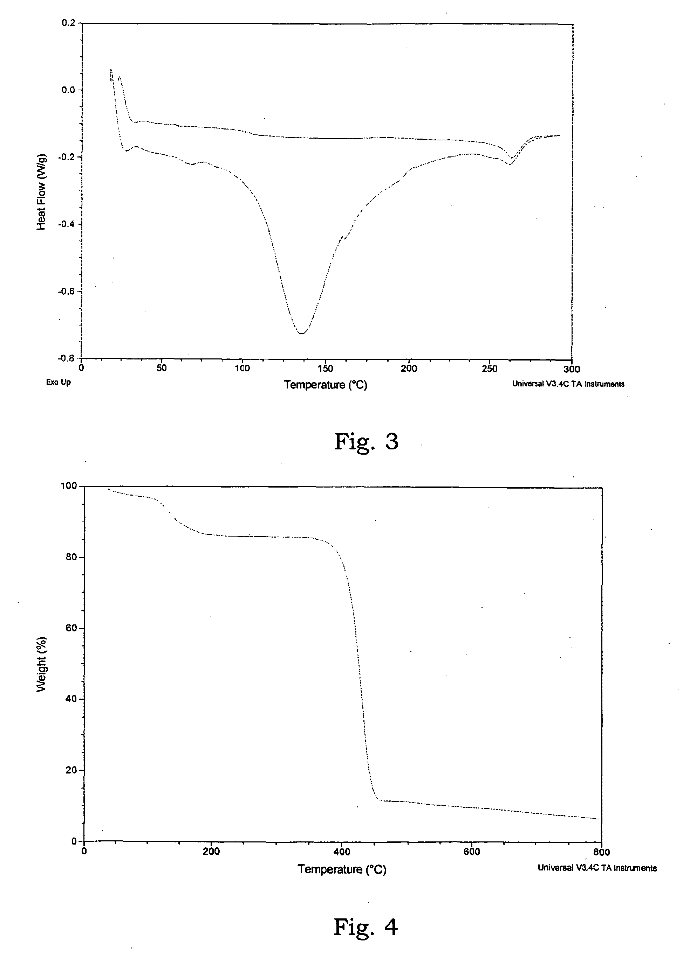

To characterize the sulfonated s-PS membrane the samples were heated to 300°C and then rapidly cooled (quenched) to the starting temperature of 25°C and then scanned to 300°C. The thermal behaviour of melt-quenched sulfonated s-PS membrane (sample C) is displayed in figure 3. For thermal scan the heating rate is 10°C/min. During the first scan the sample shows a broadly peak about 100°C to indicate the presence of water in the sample that means the presence of ion-exchange groups. The second scan shows the glass transition temperature ($T_g$) at about 100°C and the melting temperature ($T_m$) at about 270°C. The DSC scan in figure 3 compared to the DSC scan in figure 1, shows the sulfonation of syndiotactic polystyrene membrane.

In figure 4 is shown the TG scan for a sulfonated s-PS membrane (sample C). For thermal scan the heating rate is 10°C/min. Until 370°C, sulfonated s-PS membrane is stable material, occurring only water loss at about 90°C and acid loss about 130°C, but between 400°C and 800°C occurs clearly weight loss meaning its degradation.

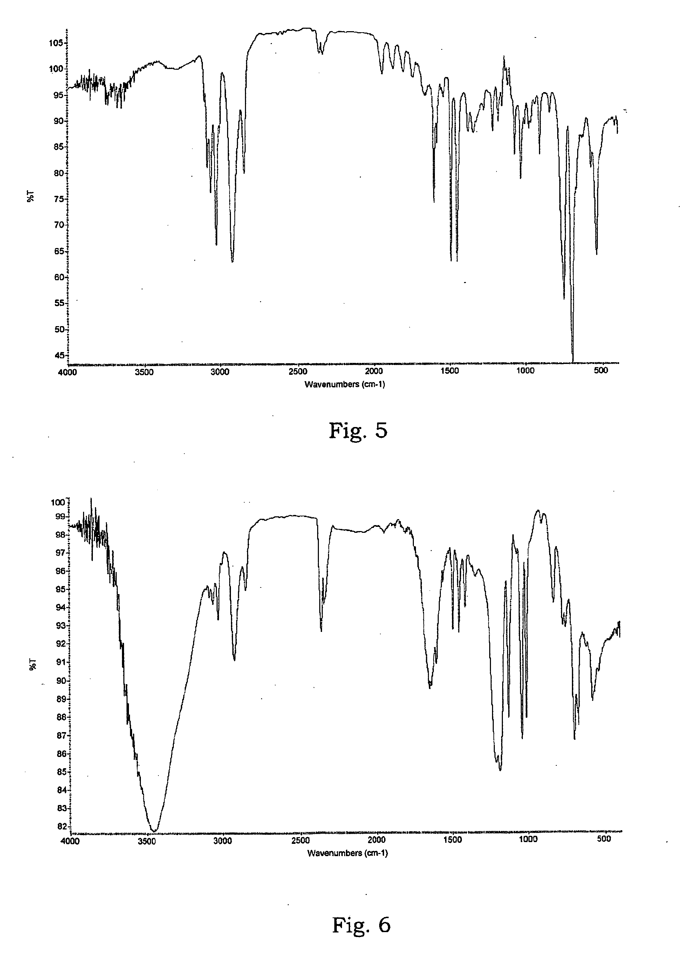

In figure 5 is shown the FT-IR spectra of s-PS membrane and in figure 6 is shown the FT-IR spectra of sulfonated s-PS membrane. The most prominent band to confirm sulfonation of the polystyrene is observed in range 1000 ÷ 1300 cm$^{-1}$. Further evidence of s-PS sulfonation is gained by observing the peak at 3500cm$^{-1}$.

Measurement of Water Content:

The membrane (sample C) was immersed in distilled water for 24 hours or longer at room temperature. Then, after water attached on surface of the membrane was wiped off, the weight $W_1$ (g) of membrane was measured. Further, the membrane was dried at 120°C for 4 hours, and the weight $W_2$ (g) thereof was measured. The water content C(%) of the membrane was calculated from the following expression:

$$C(\%) = [(W_1 - W_2)/ W_1] \times 100$$

For sample C the measurement of water content is 62.27%.

Measurement of Ion Exchange Capacity:

The membrane (sample C) was immersed in distilled water for 24 hours at room temperature. Then, after water attached on surface of the membrane was wiped off, the wet weight W (g) of membrane was measured. The membrane was placed in 150 ml of a 3.0mol/litre potassium chloride aqueous solution, and titrated with 0.01 mol/litre potassium hydroxide aqueous solution, for 24 hours at room temperature. From the measured volume V (litre) of the potassium hydroxide aqueous solution required for the neutralization titration, the ion exchange capacity (E) of the membrane was calculated according to the following expression:

$$E \text{ (milli-equivalent/g)} = 0.01 \times V/[W \times (1 - C/100)]$$

For sample C the measurement of Ion Exchange Capacity is 0.05 milli-equivalent/g.
The above measured ion exchange capacity of the membrane indicates that not all -$SO_3H$ groups available from the sulfonating agent are effective in bonding to the syndiotactic polystyrene through the sulfonation. This is however advantageous since according to the invention the ionic groups ( -$SO_3H$ groups) are introduced and regularly spaced into the crystalline regions only along the pathways interested by the ion transport, so resulting in a good electric conductivity of the membrane (see the following measure).

Measurement of Electric Conductivity of Membrane:

The membrane (sample C) was immersed in distilled water for 2 hours at room temperature and then, after water attached on surface of the membrane was wiped off, the electric conductivity of membrane was measured. Membrane conductivity was determined from lateral resistance of membrane that was measured using a four-point-probe electrochemical impedance spectroscopy technique. A BekkTech Conductivity Cell was used in order to provide a simple fixture for loading a membrane and performing four-point-probe conductivity tests. The cell had two platinum foil outer current-carrying electrodes and two platinum wire inner potential-sensing electrodes. The inner electrodes had a diameter of 0.75 mm and were placed at a distance of 0.425 cm. Membrane sample were cut into strip that was approximately 1.0 cm wide, 2 cm long and 0.02 cm thick prior to mounting in the Conductivity Cell. The Conductivity Cell, with membrane sample loaded, fitted between the anode and cathode conduction plates of Fuel Cell Technologies Hardware. Impedance measurement was made using a Solartron SI 1280B electrochemical impedance analyzer in order to measure the sample resistance. The instrument was used in galvanostatic mode with AC current amplitude of 0.01 mA over a frequency range from 0.1 to 20,000 Hz. A base value of membrane conductivity of about 14.0 mS/cm was obtained from sample resistance measurement at environmental temperature.
The above measured electric conductivity is satisfactory for several electrochemical applications.

**Claims**

1. A polyelectrolyte membrane comprising at least a styrenic polymer or co-polymer having a syndiotactic configuration and having sulfonic groups, **characterized in that** said at least a styrenic polymer or co-polymer is formed into a film in which said at least a styrenic polymer or co-polymer is in the clathrate form, said sulfonic groups being introduced into said film by reaction of said film with a sulfonating agent, said sulfonating agent being in solution state.

**2.** A polyelectrolyte membrane according to claim 1, **characterized in that** said at least one syndiotactic styrenic polymer or co-polymer in its clathrate form is syndiotactic polystyrene.

**3.** A method for producing a polyelectrolyte membrane comprising at least one syndiotactic styrenic polymer or co-polymer in its clathrate form and having sulfonic groups, the method comprising the steps of:

- preparing a solution containing at least one syndiotactic styrenic polymer or co-polymer in a solvent suitable to form clathrates into said at least one syndiotactic styrenic polymer or co-polymer,
- treating said solution to form a film containing said at least one syndiotactic styrenic polymer or co-polymer in its clathrate form,
- introducing sulfonic groups into said film containing said at least one syndiotactic styrenic polymer or co-polymer in its clathrate form, by reaction of said film with a sulfonating agent, said sulfonating agent being in a solution state, so obtaining said polyelectrolyte membrane.

**4.** The method according to claim 3, wherein said at least one syndiotactic styrenic polymer or co-polymer is syndiotactic polystyrene.

**5.** The method according to claim 4, wherein said solvent is chosen from the group comprising chloroform, methylene chloride, *o*-dichlorobenzene and toluene.

**6.** The method according to any of claims 3 to 5, wherein the film containing at least one syndiotactic styrenic polymeric or copolymer in its clathrate form or the film containing syndiotactic polystyrene in its clathrate form is formed by casting over said solution over a substrate and removing said solvent.

**7.** The method according to claim 3, wherein said sulfonating agent is concentrated sulfuric acid or chlorosulfonic acid.

**8.** The method according to claim 3 or claim 7, wherein the solvent of the sulfonating agent solution is the same solvent used to form clathrate into the at least one syndiotactic styrenic polymeric or copolymer or into the syndiotactic polystyrene.

**9.** A method for producing a polyelectrolyte membrane comprising at least one syndiotactic styrenic polymer or co-polymer in its clathrate form having sulfonic groups, the method comprising the steps of:

- providing a film of at least one syndiotactic styrenic polymer or co-polymer,
- contacting said film of at least one syndiotactic styrenic polymer or co-polymer with a solvent suitable to form clathrate into said at least one syndiotactic styrenic polymer or co-polymer for a time sufficient to form said clathrate, so obtaining a film in which said at least one syndiotactic styrenic polymer or co-polymer is in clathrate form
- introducing sulfonic groups into said film of at least one syndiotactic styrenic polymer or co-polymer in its clathrate form, by reaction of said film with a sulfonating agent, said sulfonating agent being in a solution state, so obtaining said polyelectrolyte membrane.

**10.** The method according to claim 9, wherein said at least one syndiotactic styrenic polymer or co-polymer is syndiotactic polystyrene.

**11.** The method according to claim 10, wherein the syndiotactic polystyrene is in its $\alpha$, $\gamma$ or $\delta$ polymorphic form and wherein the film is obtained by a melt-press or melt-extrusion method.

**12.** The method according to any of claims 9 to 11, wherein in said contacting step the film containing at least one syndiotactic styrenic polymer or copolymer or the film containing syndiotactic polystyrene is soaked into the solvent suitable to form clathrate for a time sufficient to form said clathrates.

**13.** The method according to claim 12, wherein said sulfonating agent is concentrated sulfuric acid or chlorosulfonic acid.

**14.** The method according to claim 12 or claim 13, wherein the the solvent of the sulfonating agent solution is the same solvent used to form clathrate into the at least one syndiotactic styrenic polymer or co-polymer or into the syndiotactic polystyrene.

**15.** Use of a syndiotactic styrenic polymer or co-polymer in a its clathrate form and having sulfonic groups as polyelectrolyte.

**16.** Use according to claim 15, wherein the syndiotactic styrenic polymer or co-polymer in its clathrate form is syndiotactic polystyrene.

**17.** Use of a polyelectrolyte membrane according to claim 1 or claim 2 for electrochemical applications.

**18.** A fuel cell comprising a polyelectrolyte membrane according to claim 1 or claim 2.

**19.** The fuel cell according to claim 18 having reduced dimensions so as to be used as power generator for portable power sources.

**Patentansprüche**

**1.** Polyelektrolytmembran aufweisend mindestens ein Styrol-Polymer oder Copolymer mit syndiotaktischer Konfiguration und mit Sulfongruppen, **dadurch gekennzeichnet, dass** das mindestens eine Styrol-Polymer oder Copolymer zu einem Film geformt ist, in dem sich das mindestens eine Styrol-Polymer oder Copolymer in der Clathratform befindet, wobei die Sulfongruppen durch Reaktion des Films mit einem Sulfonierungsmittel, das sich im Lösungszustand befindet, in den Film eingeführt werden.

**2.** Polyelektrolytmembran nach Anspruch 1, **dadurch gekennzeichnet, dass** das mindestens eine syndiotaktische Styrol-Polymer oder Copolymer in seiner Clathratform syndiotaktisches Polystyrol ist.

**3.** Verfahren zur Herstellung einer Polyelektrolytmembran aufweisend mindestens ein syndiotaktisches Styrol-Polymer oder Copolymer in seiner Clathratform und mit Sulfongruppen, wobei das Verfahren folgende Schritte aufweist:

- Herstellen einer Lösung, die mindestens ein syndiotaktisches Styrol-Polymer oder Copolymer in einem Lösungsmittel, das zur Bildung von Clathraten in dem mindestens einen syndiotaktischen Styrol-Polymer oder Copolymer geeignet ist, enthält,
- Behandeln der Lösung, um einen Film zu bilden, der das mindestens eine syndiotaktische Styrol-Polymer oder Copolymer in seiner Clathratform enthält,
- Einführen von Sulfongruppen in den Film, der das mindestens eine syndiotaktische Styrol-Polymer oder Copolymer in seiner Clathratform enthält, durch Reaktion des Films mit einem Sulfonierungsmittel, das sich im Lösungszustand befindet, um so die Polyelektrolytmembran zu erhalten.

**4.** Verfahren nach Anspruch 3, bei dem das mindestens eine syndiotaktische Styrol-Polymer oder Copolymer syndiotaktisches Polystyrol ist.

**5.** Verfahren nach Anspruch 4, bei dem das Lösungsmittel ausgewählt wird aus der Gruppe, die Chloroform, Methylenchlorid, o-Dichlorbenzol und Toluol aufweist.

**6.** Verfahren nach einem der Ansprüche 3 bis 5, bei dem der Film, der mindestens ein syndiotaktisches Styrol-Polymer oder Copolymer in seiner Clathratform enthält, oder der Film, der syndiotaktisches Polystyrol in seiner Clathratform enthält, durch Übergießen der Lösung über ein Substrat und Entfernen des Lösungsmittels gebildet wird.

**7.** Verfahren nach Anspruch 3, bei dem das Sulfonierungsmittel konzentrierte Schwefelsäure oder Chlorsulfonsäure ist.

**8.** Verfahren nach Anspruch 3 oder Anspruch 7, bei dem das Lösungsmittel der Sulfonierungsmittel-Lösung dasselbe Lösungsmittel ist, das zur Bildung eines Clathrats in dem mindestens einen syndiotaktischen Styrol-Polymer oder Co-polymer oder in dem syndiotaktischen Polystyrol verwendet wird

**9.** Verfahren zur Herstellung einer Polyelektrolytmembran aufweisend mindestens ein syndiotaktisches Styrol-Polymer oder Copolymer in seiner Clathratform mit Sulfongruppen, wobei das Verfahren folgende Schritte aufweist:

- Bereitstellen eines Films mindestens eines syndiotaktischen Styrol-Polymers oder Copolymers,
- in-Berührung-Bringen des Films mindestens eines syndiotaktischen Styroi-Polymers oder Copolymers mit einem Lösungsmittel, das zur Bildung eines Clathrats in dem mindestens einen syndiotaktischen Styrol-Polymer oder Copolymer geeignet ist, für eine Zeit, die zur Bildung des Clathrats ausreichend ist, wobei ein Film erhalten wird, in dem sich das mindestens eine syndiotaktische Styrol-Polymer oder Copolymer in Clathratform befindet,
- Einführen von Sulfongruppen in den Film mindestens eines syndiotaktischen Styrol-Polymers oder Copolymers in seiner Clathratform durch Reaktion des Films mit einem Sulfonierungsmittel, das sich im Lösungszustand befindet, um so die Polyelektrolytmembran zu erhalten.

10. Verfahren nach Anspruch 9, bei dem das mindestens eine syndiotaktische Styrol-Polymer oder Copolymer syndiotaktisches Polystyrol ist.

11. Verfahren nach Anspruch 10, bei dem sich das syndiotaktische Polystyrol in seiner polymorphen $\alpha$-, $\gamma$- oder $\delta$-Form befindet und bei dem der Film durch ein Schmelzpress- oder Schmelzextrusions-Verfahren erhalten wird.

12. Verfahren nach einem der Ansprüche 9 bis 11, bei dem der Film, der mindestens ein syndiotaktisches Styrol-Polymer oder Copolymer enthält, oder der Film, der syndiotaktisches Polystyrol enthält, bei dem Schritt des In-Berührung-Bringens in dem Lösungsmittel, das zur Bildung von Clathraten geeignet ist, für eine zur Bildung der Clathrate ausreichende Zeit eingeweicht wird.

13. Verfahren nach Anspruch 12, bei dem das Sulfonierungsmittel konzentrierte Schwefelsäure oder Chlorsulfonsäure ist.

14. Verfahren nach Anspruch 12 oder Anspruch 13, bei dem das Lösungsmittel der Sulfonierungsmittel-Lösung dasselbe Lösungsmittel ist, das zur Bildung von Clathraten in dem mindestens einen syndiotaktischen Styrol-Polymer oder Copolymer oder in dem syndiotaktischen Polystyrol verwendet wird.

15. Verwendung eines syndiotaktischen Styrol-Polymers oder Copolymers in seiner Clathratform und mit Sulfongruppen als Polyelektrolyt.

16. Verwendung nach Anspruch 15, bei der das syndiotaktische Styrol-Polymer oder Copolymer in seiner Clathratform syndiotaktisches Polystyrol ist.

17. Verwendung einer Polyelektrolytmembran nach Anspruch 1 oder Anspruch 2 für elektrochemische Anwendungen.

18. Brennstoffzelle aufweisend eine Polyelektrolytmembran nach Anspruch 1 oder Anspruch 2.

19. Brennstoffzelle nach Anspruch 18 mit verringerten Abmessungen dergestalt, dass sie als Energieerzeuger für tragbare Energiequellen zu verwenden ist.

**Revendications**

1. Membrane-polyélectrolyte comprenant au moins un polymère ou copolymère styrénique ayant une configuration syndiotactique et ayant des groupes sulfoniques, **caractérisée en ce que** ledit au moins polymère ou copolymère styrénique est façonné en un film dans lequel ledit au moins polymère ou copolymère styrénique est sous forme de clathrate, lesdits groupes sulfoniques étant introduits dans ledit film par réaction dudit film avec un agent de sulfonation, ledit agent de sulfonation étant à l'état de solution.

2. Membrane-polyélectrolyte selon la revendication 1, **caractérisée en ce que** ledit au moins polymère ou copolymère styrénique syndiotactique sous sa forme clathrate est un polystyrène syndiotactique.

3. Procédé de production d'une membrane-polyélectrolyte comprenant au moins un polymère ou copolymère styrénique syndiotactique sous sa forme clathrate et ayant des groupes sulfoniques, procédé comprenant les étapes de :

- préparation d'une solution contenant au moins un polymère ou copolymère styrénique syndiotactique dans un solvant adapté à la formation de clathrate dans ledit au moins polymère ou copolymère styrénique syndiotactique,
- traitement de ladite solution pour former un film contenant ledit au moins polymère ou copolymère styrénique syndiotactique sous sa forme clathrate,

- introduction de groupes sulfoniques dans ledit film contenant ledit au moins polymère ou copolymère styrénique syndiotactique sous sa forme clathrate, en mettant ledit film à réagir avec un agent de sulfonation, ledit agent de sulfonation étant à l'état de solution, obtenant ainsi ladite membrane-polyélectrolyte.

**4.** Procédé selon la revendication 3, dans lequel ledit au moins un polymère ou copolymère styrénique syndiotactique est un polystyrène syndiotactique.

**5.** Procédé selon la revendication 4, dans lequel ledit solvant est choisi dans le groupe comprenant le chloroforme, le chlorure de méthylène, l'ortho-dichlorobenzène et le toluène.

**6.** Procédé selon l'une quelconque des revendications 3 à 5, dans lequel le film contenant au moins un polymère ou copolymère styrénique syndiotactique sous sa forme clathrate ou le film contenant un polystyrène syndiotactique sous sa forme clathrate est formé par coulée de ladite solution sur un substrat et élimination dudit solvant.

**7.** Procédé selon la revendication 3, dans lequel ledit agent de sulfonation est de l'acide sulfurique concentré ou chlorosulfonique.

**8.** Procédé selon la revendication 3 ou la revendication 7, dans lequel le solvant de la solution d'agent de sulfonation est le même solvant utilisé pour former du clathrate dans ledit au moins un polymère ou copolymère styrénique syndiotactique ou dans ledit polystyrène syndiotactique.

**9.** Procédé de production d'une membrane-polyélectrolyte comprenant au moins un polymère ou copolymère styrénique syndiotactique sous sa forme clathrate ayant des groupes sulfoniques, le procédé comprenant les étapes de;

- obtention d'un film d'au moins un polymère ou copolymère styrénique syndiotactique,
- mise en contact dudit film d'au moins un polymère ou copolymère styrénique syndiotactique avec un solvant adapté à la formation de clathrate dans ledit au moins un polymère ou copolymère styrénique syndiotactique, pour une durée suffisante pour former ledit clathrate, obtenant ainsi un film dans lequel ledit au moins un polymère ou copolymère styrénique syndiotactique est sous sa forme clathrate,
- introduction de groupes sulfoniques dans ledit film d'au moins un polymère ou copolymère styrénique syndiotactique sous sa forme clathrate, par réaction dudit film avec un agent de sulfonation, ledit agent de sulfonation étant à l'état de solution, obtenant ainsi ladite membrane-polyélectrolyte.

**10.** Procédé selon la revendication 9, dans lequel ledit au moins un polymère ou copolymère styrénique syndiotactique est un polystyrène syndiotactique.

**11.** Procédé selon la revendication 10, dans lequel le polystyrène syndiotactique est sous sa forme polymorphe $\alpha$, $\gamma$ ou $\delta$ et dans lequel le film est obtenu par un procédé de pression de la matière fondue ou d'extrusion à l'état fondu.

**12.** Procédé selon l'une quelconque des revendications 9 à 11, dans lequel au cours de ladite étape de mise en contact, le film contenant au moins un polymère ou copolymère styrénique syndiotactique ou le film contenant du polystyrène syndiotactique est trempé dans le solvant adapté à la formation de clathrate pour une durée suffisante pour former lesdits clathrates.

**13.** Procédé selon la revendication 12, dans lequel ledit agent de sulfonation est de l'acide sulfurique concentré ou chlorosulfonique.

**14.** Procédé selon la revendication 12 ou la revendication 13, dans lequel le solvant de la solution d'agent de sulfonation est le même solvant utilisé pour former du clathrate dans ledit au moins un polymère ou copolymère styrénique syndiotactique ou dans le polystyrène syndiotactique.

**15.** Utilisation d'un polymère ou copolymère styrénique syndiotactique dans sa forme clathrate et ayant des groupes sulfoniques comme polyélectrolyte.

**16.** Utilisation selon la revendication 15, dans lequel le polymère ou copolymère styrénique syndiotactique sous sa forme clathrate est du polystyrène syndiotactique.

**17.** Utilisation d'une membrane-polyélectrolyte selon la revendication 1 ou la revendication 2 pour des applications électrochimiques.

18. Pile à combustible comprenant une membrane-polyélectrolyte selon la revendication 1 ou la revendication 2.

19. Pile à combustible selon la revendication 18 ayant des dimensions réduites de façon à pouvoir être utilisée comme générateur d'énergie électrique pour sources d'énergie électrique portables.

Fig. 1

Fig. 2

Fig. 3

Fig. 4

Fig. 5

Fig. 6